(19) Europäisches Patentamt
European Patent Office
Office européen des brevets

(11) **EP 4 744 995 A2**

(12) **EUROPEAN PATENT APPLICATION**

(43) Date of publication:
20.05.2026 Bulletin 2026/21

(21) Application number: 26163971.0

(22) Date of filing: 11.03.2026

(51) International Patent Classification (IPC):
**B60W 40/04** (2006.01)    **B60W 50/00** (2006.01)
**B60W 60/00** (2020.01)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 14.03.2025 CN 202510307607

(71) Applicant: **Apollo Intelligent Driving Technology (Beijing) Co., Ltd.**
**Haidian District**
**Beijing 100085 (CN)**

(72) Inventors:
• **CAO, Zhihui**
**Beijing, 100085 (CN)**

• **GAO, Han**
**Beijing, 100085 (CN)**
• **XIE, Yuanfan**
**Beijing, 100085 (CN)**
• **PAN, Hongfei**
**Beijing, 100085 (CN)**
• **WEN, Boxuan**
**Beijing, 100085 (CN)**

(74) Representative: **Zimmermann, Tankred Klaus**
**Schoppe, Zimmermann, Stöckeler**
**Zinkler, Schenk & Partner mbB**
**Patentanwälte**
**Radlkoferstrasse 2**
**81373 München (DE)**

(54) **TRAJECTORY PLANNING METHOD AND APPARATUS, ELECTRONIC DEVICE, AND AUTONOMOUS VEHICLE**

(57) The present disclosure provides a trajectory planning method and apparatus, an electronic device, and an autonomous vehicle, which relate to the field of artificial intelligence technologies, and in particular to the field of autonomous driving technologies. A specific implementation solution of the trajectory planning method includes: acquiring, during driving of a target vehicle, a driving environment information of a current time period, a first expected motion trajectory of an obstacle in a historical time period, and an actual motion trajectory of the obstacle in the historical time period, where a driving trajectory of the target vehicle in the current time period is generated based on the first expected motion trajectory; updating parameters of a target model based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory; and processing the driving environment information by using the updated target model to generate a target trajectory, where the target trajectory is configured to control the target vehicle to drive in a target time period.

FIG. 2

**Description**

TECHNICAL FIELD

The present disclosure relates to the field of artificial intelligence technologies, in particular to the field of autonomous driving technologies, and specifically to a trajectory planning method and apparatus, an electronic device, and an autonomous vehicle.

BACKGROUND

With continuous breakthroughs in autonomous driving technologies, autonomous driving systems have gradually become an important development direction in the future transportation field. At present, an autonomous driving system mainly relies on close coordination among modules such as perception, prediction, decision-making, and planning and control, by which the autonomous driving system may collect environmental information through various sensors and make decisions and plans after processing the environmental information through a series of algorithms, so as to control a vehicle to drive safely and autonomously in complex and dynamic traffic environments.

SUMMARY

The present disclosure provides a trajectory planning method and apparatus, an electronic device, and an autonomous vehicle.

According to an aspect of the present disclosure, a trajectory planning method is provided, including: acquiring, during driving of a target vehicle, a driving environment information of a current time period, a first expected motion trajectory of an obstacle in a historical time period, and an actual motion trajectory of the obstacle in the historical time period, where a driving trajectory of the target vehicle in the current time period is generated based on the first expected motion trajectory; updating parameters of a target model based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory; and processing the driving environment information by using the updated target model to generate a target trajectory, where the target trajectory is configured to control the target vehicle to drive in a target time period.

According to another aspect of the present disclosure, a trajectory planning apparatus is provided, including an acquisition module, an update module, and a generation module.

The acquisition module is configured to acquire, during driving of a target vehicle, a driving environment information of a current time period, a first expected motion trajectory of an obstacle in a historical time period, and an actual motion trajectory of the obstacle in the historical time period, where a driving trajectory of the target vehicle in the current time period is generated based on the first expected motion trajectory.

The update module is configured to update parameters of a target model based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory.

The generation module is configured to process the driving environment information by using the updated target model to generate a target trajectory, where the target trajectory is configured to control the target vehicle to drive in a target time period.

According to an aspect of the present disclosure, an electronic device is provided, including: at least one processor; and a memory communicatively connected to the at least one processor, where the memory stores instructions executable by the at least one processor, and the instructions are configured to, when executed by the at least one processor, cause the at least one processor to perform the method described above.

According to another aspect of the present disclosure, an autonomous vehicle is provided, including the electronic device described above.

According to another aspect of the present disclosure, a non-transitory computer-readable storage medium having computer instructions therein is provided, where the computer instructions are configured to cause a computer to perform the method described above.

According to another aspect of the present disclosure, a computer program product including a computer program is provided, where the computer program is configured to, when executed by a processor, implement the method described above.

It should be understood that the content described in this section is not intended to identify key or essential features of embodiments of the present disclosure, nor is it intended to limit the scope of the present disclosure. Other features of the present disclosure will become easily understood through the following description.

BRIEF DESCRIPTION OF THE DRAWINGS

The accompanying drawings are provided to facilitate a better understanding of the present disclosure and do not constitute limitations to the present disclosure. In the accompanying drawings:

FIG. 1 schematically shows an exemplary system architecture to which a trajectory planning method and apparatus according to embodiments of the present disclosure may be applied;

FIG. 2 schematically shows a flowchart of a trajectory planning method according to embodiments of the present disclosure;

FIG. 3 schematically shows a framework diagram for implementing the trajectory planning method according to embodiments of the present disclosure;

FIG. 4A schematically shows a diagram for determining a backtracking time period according to changes in trajectory deviation between a historical expected motion trajectory and an actual motion trajectory of an obstacle according to an embodiment of the present disclosure;

FIG. 4B schematically shows a diagram for determining a backtracking time period according to changes in trajectory deviation between a historical expected motion trajectory and an actual motion trajectory of an obstacle according to another embodiment of the present disclosure;

FIG. 5 schematically shows a diagram of updating parameters of a target model according to embodiments of the present disclosure;

FIG. 6 schematically shows a block diagram of a trajectory planning apparatus according to embodiments of the present disclosure; and

FIG. 7 schematically shows a block diagram of an electronic device suitable for implementing the trajectory planning method according to embodiments of the present disclosure.

DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

In the field of autonomous driving technologies, the ongoing problem is to provide safe driving trajectories for autonomous vehicles operating in complex and dynamically changing traffic scenarios.

In related examples, trajectory planning is mainly implemented through model-based methods, data-driven methods, and hybrid methods combining models and data.

Trajectory planning methods based on mathematical models typically rely on relatively fixed simulated environments. As the environment changes, the performance of the original model declines accordingly. Moreover, such methods have high computational requirements, especially when simulating large-scale environments or performing real-time optimization, which requires strong computing capability and increases system complexity and cost.

Although data-driven methods exhibit high flexibility and adaptability, they rely on large amounts of high-quality data for training. For autonomous driving systems, this means that massive amounts of sensor data and driving decision data need to be collected and processed. In real-world environments, issues such as incomplete data and noise interference may occur, affecting the accuracy and reliability of the data and thereby impacting the learning effectiveness of the model. Secondly, such methods generally lack interpretability. Since such methods rely on black-box models such as deep learning and reinforcement learning, when the system makes an error or exhibits behavior inconsistent with expectations, it is difficult to trace the root cause of the problem, and effective explanation and feedback mechanisms are lacking. Furthermore, training of data-driven methods typically requires substantial time and computational resources. Especially when environmental conditions change dramatically, the training process may need to be frequently updated, thereby increasing system operation and maintenance costs.

Hybrid methods based on both models and data require finding a balance between model and data, so as to provide a good starting point for the data-driven component. The design and adjustment of this balance are highly complex. Excessive reliance on models may result in insufficient adaptability of the system when facing dynamic environments, while excessive reliance on data may reduce interpretability and controllability of the model. Secondly, such methods require a large amount of data to compensate for model deficiencies, especially in rare scenarios where substantial real-time data is needed for optimization and updating. Therefore, the system must continuously collect and process large volumes of sensor data, which increases the burden of data processing and storage and leads to increased resource consumption of the system. Finally, although hybrid methods may improve system robustness to a certain extent, their implementation is complex, and input information from different modules (models and data) may conflict with each other. Designing an effective fusion mechanism thus becomes a major challenge.

In view of the above, embodiments of the present disclosure provide a trajectory planning method, in which model parameters are corrected based on a difference between an expected motion trajectory and an actual motion trajectory of an obstacle in a historical time period, thereby enabling posterior analysis of trajectory planning results, optimizing the accuracy of autonomous driving decision-making and planning, and achieving parameter self-calibration of the autonomous driving system. As a result, the adaptability of the autonomous driving system in complex interactive scenarios is improved, ensuring that the autonomous vehicle produces reasonable and accurate action outputs, and enabling the autonomous vehicle to better adapt to complex traffic scenarios and coordinate driving with other vehicles.

Compared with trajectory planning methods based on mathematical models in related examples, embodiments of the present disclosure may be implemented to effectively reduce reliance on complex mathematical models. By analyzing historical data, it is possible to learn from previous decisions and feedback to optimize current decision-making and planning, without fully relying on real-time computation of large-scale environmental models, thereby avoiding the challenges of model obsolescence and frequent updates inherent in traditional model-based methods.

Compared with data-driven trajectory planning methods in related examples, embodiments of the present disclosure provide stronger interpretability. By backtracking and analyzing historical decision frames, the system may clearly trace the underlying causes and evolution process of decisions, facilitating troubleshooting and thereby improving system adjustability and maintenance efficiency.

Compared with trajectory planning methods combining mathematical models and data driving in related examples, embodiments of the present disclosure provide a more natural way to regulate the decision-making and planning process. Historical data continuously feeds back to optimize decision-making and planning, ensuring that the system may more efficiently cope with complex and dynamic driving environments, while reducing the burden of data processing and storage.

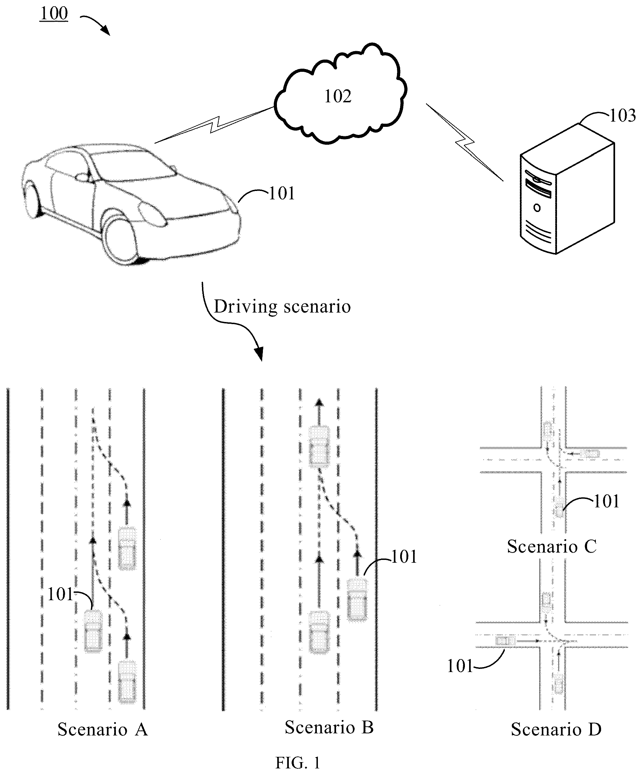

FIG. 1 schematically shows an exemplary system architecture to which a trajectory planning method and apparatus according to embodiments of the present disclosure may be applied.

It should be noted that FIG. 1 is merely an example of the system architecture to which embodiments of the present disclosure may be applied, so as to help those skilled in the art understand technical contents of the present disclosure. However, it does not mean that embodiments of the present disclosure may not be applied to other devices, systems, environments, or scenarios. For example, in another embodiment, the exemplary system architecture to which the trajectory planning method and apparatus may be applied may include a terminal device, but the terminal device may implement the trajectory planning method and apparatus provided in embodiments of the present disclosure without interacting with a server.

As shown in FIG. 1, a system architecture 100 according to such embodiments may include an autonomous vehicle 101, a network 102, and a server 103. The network 102 serves as a medium for providing a communication link between the autonomous vehicle 101 and the server 103. The network 102 may include a wireless communication link and the like.

The autonomous vehicle 101 may be configured with various sensors for collecting driving environment information. The collected driving environment information may then be transmitted to the server 103 via the network 102. The server 103 may generate a target trajectory by performing the trajectory planning method according to embodiments of the present disclosure, and transmit the target trajectory to the autonomous vehicle 101, so as to control the autonomous vehicle to drive along the target trajectory.

The trajectory planning method provided in embodiments of the present disclosure may also be generally performed by a processor configured in the autonomous vehicle 101. Accordingly, the trajectory planning apparatus provided in embodiments of the present disclosure may also be disposed in the autonomous vehicle 101.

Several relatively complex driving scenarios are listed below, to which the trajectory planning method provided in embodiments of the present disclosure is applicable.

In Scenario A, the autonomous vehicle 101 is driving straight along a road, and vehicles are present at both the front side and rear side of the autonomous vehicle 101, preparing to enter the lane in which the autonomous vehicle 101 is driving.

In Scenario B, the autonomous vehicle 101 intends to change lanes. In the lane into which the autonomous vehicle 101 intends to move, there are vehicles driving both ahead of and behind the autonomous vehicle 101.

In Scenario C, the autonomous vehicle 101 drives to an intersection area and intends to proceed straight through the intersection. In the opposite lane, there is a vehicle intending to turn left and pass through the lane in which the autonomous vehicle 101 is driving, and there is also a vehicle intending to turn right and enter the lane in which the autonomous vehicle 101 is driving.

In Scenario D, the autonomous vehicle 101 drives to an intersection area and intends to turn right. In both the opposite lane and the left-side lane, there are vehicles intending to enter the same lane that the autonomous vehicle 101 intends to enter.

In the above four driving scenarios, any deviation in the target trajectory provided for the autonomous vehicle may lead to a risk of collision with other vehicles. In the trajectory planning method provided in embodiments of the present disclosure, a target trajectory is generated based on accurately determining the expected driving trajectories of other vehicles that affect the safe driving of the autonomous vehicle 101. Therefore, the autonomous vehicle 101 may safely coordinate driving with other vehicles on the road by following the target trajectory generated by the trajectory planning method provided in embodiments of the present disclosure.

It should be understood that the numbers of autonomous vehicles, networks, and servers shown in FIG. 1 are merely illustrative. According to implementation requirements, any number of autonomous vehicles, networks, and servers may be provided.

In the technical solutions of the present disclosure, the collection, storage, use, processing, transmission, provision, disclosure, and application of user personal information involved comply with relevant laws and regulations, necessary confidentiality measures have been taken, and no violation of public order and good morals occurs.

In the technical solutions of the present disclosure, user authorization or consent is obtained before acquiring or collecting any user personal information.

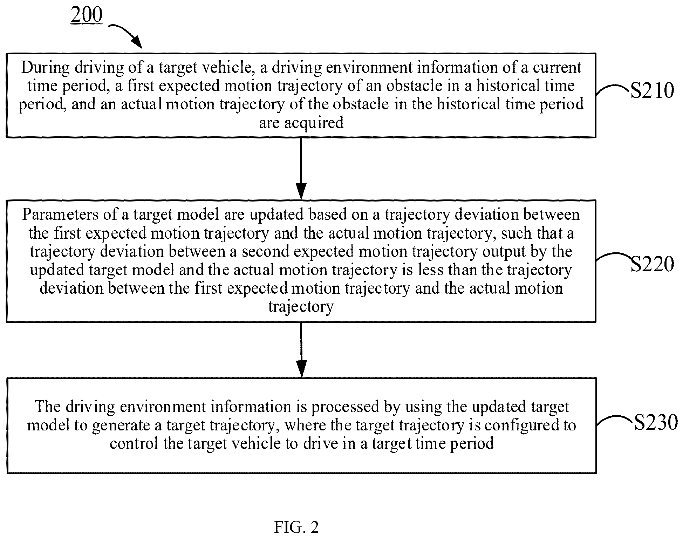

FIG. 2 schematically shows a flowchart of a trajectory planning method according to embodiments of the present disclosure.

As shown in FIG. 2, a method 200 includes operation S210 to operation S230.

In operation S210, during driving of a target vehicle, a driving environment information of a current time period, a first expected motion trajectory of an obstacle in a historical time period, and an actual motion trajectory of the obstacle in the historical time period are acquired.

In operation S220, parameters of a target model are updated based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory.

In operation S230, the driving environment information is processed by using the updated target model to generate a target trajectory, where the target trajectory is configured to control the target vehicle to drive in a target time period.

According to embodiments of the present disclosure, the target vehicle may be an autonomous vehicle. The driving environment information represents an information that affects driving decisions of the autonomous vehicle, such as a lane line information, a position information of a static obstacle, a road condition information, a current driving state information of the autonomous vehicle, and a driving state information of a dynamic obstacle. The static obstacle includes, but is not limited to, various forms of roadblocks and green belts. The dynamic obstacle may be various vehicles driving on the road, including but not limited to various types of vehicles.

In embodiments of the present disclosure, the obstacle refers to a dynamic obstacle that affects driving decisions of the autonomous vehicle, such as a vehicle driving in the same lane as the autonomous vehicle or in an adjacent lane, a vehicle that may enter or leave the lane of the autonomous vehicle by changing lanes; or a vehicle driving in a lane that the autonomous vehicle intends to enter or leave by changing lanes.

According to embodiments of the present disclosure, the first expected motion trajectory may be generated by the target model based on a motion information of the obstacle collected by a sensor configured on the autonomous vehicle. The actual motion trajectory may be an actual motion information of the obstacle in the historical time period. The driving trajectory of the target vehicle in the current time period is planned based on the first expected motion trajectory.

In some embodiments, the target model may be a data processing module configured in an autonomous driving system for generating trajectories. Embodiments of the present disclosure do not impose specific limitations on the model.

In some embodiments, during driving of the target vehicle, by configuring a backtracking duration, a deviation between the expected motion trajectory and the actual motion trajectory of the obstacle in the historical time period may be calculated in real time, and parameters of the target model may be updated based on a calculation result, such that the deviation between the expected motion trajectory of the obstacle output by the updated target model and the actual motion trajectory of the obstacle is reduced.

For example, the backtracking duration may be 10 seconds. At the 20th second, the target vehicle may backtrack to the first expected motion trajectory and the actual motion trajectory of the obstacle during the 10th to 20th seconds, and calculate a trajectory deviation. For example, the trajectory deviation may be 0.2. The parameters of the target model may then be updated. Since the first expected motion trajectory of the obstacle during the 10th to 20th seconds was generated based on the driving state of the obstacle during the 1st to 5th seconds, the driving state of the obstacle during the 1st to 5th seconds may be input into the updated target model to output a second expected motion trajectory, and a trajectory deviation may be calculated as 0.02. In this way, the parameters of the target model may be updated multiple times until the trajectory deviation converges.

Thereafter, the updated target model is used to process the driving environment information to generate a target trajectory for controlling the target vehicle to drive in the target time period.

According to embodiments of the present disclosure, the target time period may be a next time cycle relative to the current time period. A length of the time cycle may be configured according to practical requirements and may be, for example, 5 seconds.

For example, a motion state of the obstacle in the current time period (20th to 25th seconds) may be input into the updated model to output an expected motion trajectory of the obstacle during the 25th to 30th seconds. Based on the expected motion trajectory and the driving state of the target vehicle in the current time period, a target trajectory of the target vehicle during the 25th to 30th seconds may be generated, so as to control the target vehicle to drive along the target trajectory during the 25th to 30th seconds, thereby achieving safe coordinated driving with the obstacle.

According to embodiments of the present disclosure, model parameters are corrected based on the difference between the expected motion trajectory and the actual motion trajectory of the obstacle in the historical time period, thereby enabling posterior analysis of trajectory planning results, optimizing the accuracy of autonomous driving decision-making and planning, and achieving parameter self-calibration of the autonomous driving system. As a result, the adaptability of the autonomous driving system in complex interactive scenarios is improved, ensuring that the autonomous vehicle produces reasonable and accurate action outputs, and enabling the autonomous vehicle to better adapt to complex traffic scenarios and coordinate driving with other vehicles.

The foregoing are merely exemplary embodiments, and the present disclosure is not limited thereto. Other trajectory planning methods known in the art may also be included, as long as posterior analysis based on historical data of the obstacle may be performed to automatically correct model parameters of the autonomous driving system.

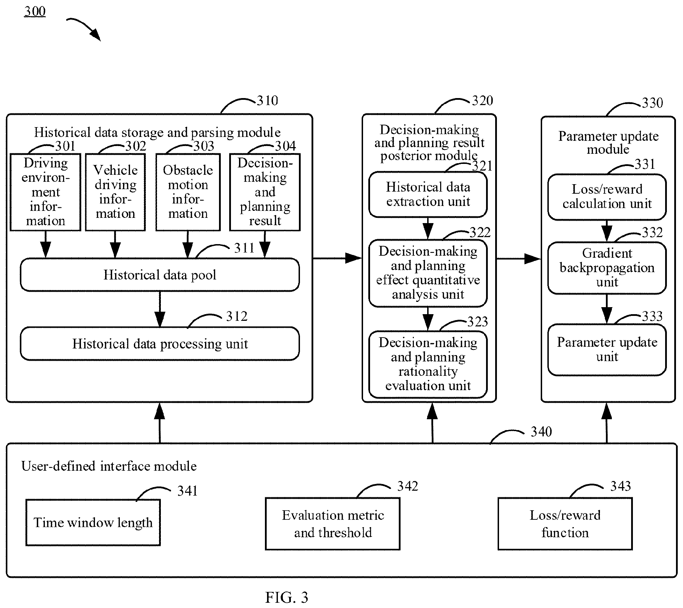

The method shown in FIG. 2 will be further described below with reference to FIG. 3 to FIG. 5 in conjunction with specific embodiments.

FIG. 3 schematically shows a framework diagram for implementing the trajectory planning method according to embodiments of the present disclosure.

As shown in FIG. 3, a framework 300 may include: a historical data storage and parsing module 310, a decision-making and planning result posterior module 320, a parameter update module 330, and a user-defined interface 340.

The historical data storage and parsing module 310 is configured to continuously collect and store a driving environment information 301, a vehicle driving information 302, an obstacle motion information 303, and a decision-making and planning result 304 at each time instant during driving of the target vehicle.

For example, the target vehicle driving information may be represented by $I_{\text{adc}}^{\text{org}}$, including an actual driving position ($x_{\text{adc}}^{\text{real}}, y_{\text{adc}}^{\text{real}}$), an actual velocity ($v_{\text{adc}}^{\text{real}}$), an actual acceleration ($a_{\text{adc}}^{\text{real}}$), and other information of the autonomous vehicle, as well as a planned position ($x_{\text{adc}}^{\text{plan}}, y_{\text{adc}}^{\text{plan}}$), a planned velocity ($v_{\text{adc}}^{\text{plan}}$), and a planned acceleration ($a_{\text{adc}}^{\text{plan}}$) output by the autonomous driving system.

The obstacle driving information may be represented by $I_{\text{obsi}}^{\text{org}}(i = 1, 2, \cdots, n)$, encompassing data such as an actual motion trajectory ($x_{\text{obsi}}^{\text{real}}, y_{\text{obsi}}^{\text{real}}$), an actual velocity ($v_{\text{obsi}}^{\text{real}}$), and an actual acceleration ($a_{\text{obsi}}^{\text{real}}$) of the obstacle, as well as a predicted trajectory ($x_{\text{obsi}}^{\text{plan}}, y_{\text{obsi}}^{\text{plan}}$), a predicted velocity ($v_{\text{obsi}}^{\text{plan}}$), and a predicted acceleration ($a_{\text{obsi}}^{\text{plan}}$) of the obstacle in the future motion state generated by the autonomous driving system during global decision-making and planning process.

With continuous interaction between the target vehicle and surrounding obstacles, the data may be continuously updated and stored. Each decision-making and planning result may be stored in real time and associated with the driving state information of the previous time instant to form time-series data. Such time-series data not only provide accurate references for subsequent decision-making processes, but also provide necessary historical data support for the autonomous driving system to perform functions such as posterior analysis, anomaly detection, and parameter self-calibration.

Over time, the system may gradually accumulate a large amount of historical frame data, forming a rich historical data pool 311, as shown in Equation (1).

$$\begin{cases} I_{\text{adc}}^{\text{org}} = \left\{ x_{\text{adc}}^{\text{real}}, y_{\text{adc}}^{\text{real}}, v_{\text{adc}}^{\text{real}}, a_{\text{adc}}^{\text{real}}, x_{\text{adc}}^{\text{plan}}, y_{\text{adc}}^{\text{plan}}, v_{\text{adc}}^{\text{plan}}, a_{\text{adc}}^{\text{plan}} \right\} \\ I_{\text{obs1}}^{\text{org}} = \left\{ x_{\text{obs1}}^{\text{real}}, y_{\text{obs1}}^{\text{real}}, v_{\text{obs1}}^{\text{real}}, a_{\text{obs1}}^{\text{real}}, x_{\text{obs1}}^{\text{plan}}, y_{\text{obs1}}^{\text{plan}}, v_{\text{obs1}}^{\text{plan}}, a_{\text{obs1}}^{\text{plan}} \right\} \\ I_{\text{obs2}}^{\text{org}} = \left\{ x_{\text{obs2}}^{\text{real}}, y_{\text{obs2}}^{\text{real}}, v_{\text{obs2}}^{\text{real}}, a_{\text{obs2}}^{\text{real}}, x_{\text{obs2}}^{\text{plan}}, y_{\text{obs2}}^{\text{plan}}, v_{\text{obs2}}^{\text{plan}}, a_{\text{obs2}}^{\text{plan}} \right\} \\ \qquad\qquad\qquad\qquad \vdots \\ I_{\text{obs}n}^{\text{org}} = \left\{ x_{\text{obs}n}^{\text{real}}, y_{\text{obs}n}^{\text{real}}, v_{\text{obs}n}^{\text{real}}, a_{\text{obs}n}^{\text{real}}, x_{\text{obs}n}^{\text{plan}}, y_{\text{obs}n}^{\text{plan}}, v_{\text{obs}n}^{\text{plan}}, a_{\text{obs}n}^{\text{plan}} \right\} \end{cases} \tag{1}$$

To further improve data processing efficiency during subsequent parameter update processes, the historical data in the historical data pool 311 may be parsed and preprocessed by using a historical data processing unit 312. The preprocessing may include, but is not limited to, data format unification, data filtering and smoothing, data normalization, and feature engineering.

Different sensors and system modules collect and output data in different formats. To integrate heterogeneous data into a standard format that the system may process, the raw historical data may be uniformly converted. Taking the obstacle motion information as an example, when collecting motion information of each obstacle, a motion trajectory may be obtained in an SL (longitudinal-lateral) coordinate system established with the obstacle as a reference. In order to ensure that motion information of all traffic participants may be compared and analyzed within the same framework, all motion information of autonomous vehicles and obstacles involved in autonomous driving decision-making and planning needs to be converted into the same coordinate system.

Data filtering may employ methods such as mean filtering and Kalman filtering to remove instantaneous noise caused by defects in sensors and autonomous driving systems, thereby providing more accurate data collection results. The smoothing process may further reduce discontinuities in the data through low-pass filtering or Bayesian smoothing, making the data more coherent. This not only improves data stability but also avoids interference caused by unrealistic abrupt changes to the autonomous driving system.

Data normalization involves mapping data of different scales and units into a unified standardized numerical range, thereby eliminating dimensional differences and ensuring that various features are processed on the same scale, which facilitates subsequent data analysis and parameter tuning. In posterior analysis of autonomous driving decision-making and planning, normalized data may provide more stable and consistent inputs, thereby facilitating subsequent model parameter self-calibration.

Feature engineering is a crucial step in data preprocessing, aiming to extract features beneficial for decision-making and planning from raw data, thereby improving the performance of the autonomous driving system. Feature engineering involves not only processing raw sensor data, but also analyzing and transforming historical frame time-series data. First, according to the driving scenario, features most critical to the target task are selected, and redundant or irrelevant features are removed to reduce computational complexity. Second, based on task characteristics, different features are fused to construct new features, thereby providing richer information for subsequent decision posterior analysis and parameter self-calibration. Finally, for decision-making and planning requirements in specific scenarios, feature encoding is performed to further enhance environment understanding capabilities of the autonomous driving system.

In some embodiments, by recording in real time key information such as perception data, vehicle state information, and decision execution outputs collected during the vehicle driving process, a comprehensive historical data repository is constructed to ensure that each frame of collected data is accurately recorded and archived. Data refinement is accomplished based on data smoothing, feature engineering, and other methods to provide a reference basis for subsequent decision-making, planning, and optimization, thereby ensuring that the decision-making system may be reasonably optimized according to actual historical behaviors.

An output result of the historical data storage and parsing module 310 consists of filtered and smoothed historical decision-making and planning data and actual data, which may be directly used as input to the decision-making and planning result posterior module 320.

The decision-making and planning result posterior module 320 is configured to perform a post-analysis on the decision-making and planning result generated by the autonomous driving system. Its function is to backtrack a decision-making and planning path based on the historical data and the driving states, and to accomplish an evaluation of the rationality of the decision-making and planning.

The decision-making and planning result posterior module 320 may include a historical data extraction unit 321, a decision-making and planning effect quantitative analysis unit 322, and a decision-making and planning rationality evaluation unit 323.

The historical data extraction unit 321 may extract historical data of predetermined dimensions from the historical data according to a predetermined backtracking time range, for example, 4 to 10 seconds. The predetermined dimensions may be determined based on correlation with the decision-making and planning results.

The decision-making and planning effect quantitative analysis unit 322 may be configured to perform quantitative analysis of decision-making and planning effects by calculating the deviation between the expected motion trajectory of the obstacle and the actual motion trajectory of the obstacle.

The decision-making and planning rationality evaluation unit 323 may be configured to comprehensively analyze the decision-making and planning result of the autonomous driving system by combining the historical data and the calculated quantitative analysis results, so as to determine the rationality and effectiveness of the decision-making and planning result in practical applications. The rationality evaluation not only focuses on whether the decision-making and planning conform to an expected objective, but also considers environmental complexity, unexpected situations, and system performance in real-world scenarios. For example, a threshold for driving safety and comfort may be set according to specific driving environments to evaluate safety and rationality, so as to determine whether there is a collision risk or an uncomfortable operation such as excessively sudden braking.

In some embodiments, in the decision and planning execution process and the posterior analysis process, the real-time perception data is combined with the historical data, and the driving decision is generated and executed based on the input historical data and the current sensor feedback. During the decision execution process, the posterior analysis module may evaluate the effectiveness of real-time decisions, and determine the rationality and feasibility of the strategy by comparing the current execution result with the historical data. If a deviation occurs, the system may provide immediate feedback and adjust the strategy, making the decision-making process more accurate and flexible.

The parameter update module 330 is configured to automatically correct a parameter deviation of the system by analyzing the historical data, the posterior result of decision-making and planning, and the actual execution condition, thereby improving the stability and adaptability of the autonomous vehicle.

The parameter update module 330 may include a loss/reward calculation unit 331, a gradient backpropagation unit 332, and a parameter update unit 333.

For example, the loss/reward calculation unit 331 may be configured to determine a loss value or reward value based on the deviation between the expected motion trajectory and the actual motion trajectory of the obstacle in the historical time period. The gradient backpropagation unit 332 may be configured to adjust model parameters through gradient ascent until the loss value or reward value converges. The parameter update unit 333 may be configured to update the model parameters to the parameter values corresponding to convergence of the loss value or reward value.

In some embodiments, the parameter self-calibration process relies on a combination of the historical data and the real-time feedback. By analyzing the deviation occurring during the decision-making and planning process, various control parameters of the system may be automatically adjusted to ensure that the optimal performance of the autonomous driving system is consistently maintained. To avoid a deviation accumulation caused by dynamic environmental changes, the self-calibration mechanism may continuously monitor the execution state and feedback data of the autonomous driving system, identify potential issues using adaptive algorithms, and perform corrections based on the historical data.

The user-defined interface module 340 is configured to provide flexible custom function configuration and analysis tools to meet application requirements in different scenarios, allowing developers to adjust system parameters for decision-making and planning and set evaluation criteria according to specific intelligent driving scenarios, thereby achieving highly personalized decision-making, planning, and analysis for autonomous driving. Information configurable by users may include, but is not limited to, a time window length 341, an evaluation metric and threshold 342, and a loss/reward function.

In some embodiments, an intuitive and user-friendly graphical interface may be provided for users, enabling developers and users to operate and configure the decision-making and planning system in a graphical manner. The interface may generally include drag-and-drop components for decision-making, planning and evaluation modules, a visual control panel, and a real-time feedback function, allowing development and debugging personnel to intuitively set parameters for decision-making, planning and evaluation, thresholds for safety and comfort, and the like through visual operations.

In some embodiments, a programmable interface may further be provided to developers, enabling customization and extension of the system through programming. An API (Application Programming Interface) may be provided to integrate with other systems or to adjust parameters of decision-making and planning modules by writing scripts. By providing open APIs, developers may flexibly invoke functional modules in the system, perform advanced operations, acquire real-time feedback and historical data, and perform automated testing.

In some embodiments, flexible configuration files may further be provided to enable developers to finely control various system settings and parameters in a textual or code-based manner. These configuration files typically adopt standard formats, such as JSON, XML, or YAML. Developers may define operational parameters, evaluation criteria, algorithm tuning and other details of the decision-making and planning system in such files.

During driving of the target vehicle, the driving environment is complex and dynamic. In order to adapt to changes in the driving environment and adjust the driving trajectory in a timely manner, a predetermined duration may be configured via the user-defined interface module 340 to reduce the data processing volume during the parameter update process.

In some embodiments, before updating the parameters of the target model based on the trajectory deviation between the first expected motion trajectory and the actual motion trajectory, the method further includes: determining a target historical time period from the historical time period based on a predetermined duration; and extracting a target expected motion trajectory for the target historical time period and a target actual motion trajectory for the target historical time period respectively from the first expected motion trajectory and the actual motion trajectory.

According to embodiments of the present disclosure, the predetermined duration may include a lower duration limit and an upper duration limit, for example, 4 to 10 seconds, where 4 seconds is the lower duration limit and 10 seconds is the upper duration limit.

When a duration during which the obstacle participates in the driving decision-making of the autonomous vehicle is less than the lower duration limit, the backtracking duration may be dynamically extended backward according to a duration difference, so as to ensure that at least historical time-series data with a length equal to the lower duration limit is used for parameter update.

For example, if backtracking starts from the 5th second, but the obstacle only began participating in the driving environment of the autonomous vehicle at the 3rd second, then backtracking may be further extended backward by 1 second, such that the target historical time period may be from the 1st second to the 5th second.

When the duration during which the obstacle participates in the driving decision-making of the autonomous vehicle is greater than the upper duration limit, only the duration corresponding to the upper duration limit may be backtracked, so as to ensure that at most historical time-series data with a length equal to the upper duration limit is used for parameter update.

For example, if backtracking starts from the 20th second and the obstacle has participated in the driving environment of the autonomous vehicle since the 1st second, then only 10 seconds may be backtracked, such that the target historical time period may be from the 10th second to the 20th second.

Subsequently, the target expected motion trajectory from the 10th to the 20th seconds may be extracted from the first expected motion trajectory, and the target actual motion trajectory from the 10th to the 20th seconds may be extracted from the actual motion trajectory.

According to embodiments of the present disclosure, by configuring the backtracking duration of the historical data, redundant data in the parameter update process may be reduced. This further improves data processing efficiency, enhances timeliness of real-time parameter correction during operation of the target vehicle, and improves the accuracy of trajectory planning.

In some embodiments, in addition to the predetermined duration, variations between the expected motion trajectory and the actual motion trajectory of the obstacle within the historical time period may further be comprehensively considered to determine the target historical time period.

For example, the historical time period may include T time instants, where T is an integer greater than 1. Determining the target historical time period from the historical time period based on the predetermined duration may include: determining a T-th time instant as a backtracking start time instant; determining a backtracking end time instant based on the trajectory deviation at each time instant and the predetermined duration; and determining a time period between the backtracking start time instant and the backtracking end time instant as the target historical time period.

According to embodiments of the present disclosure, the trajectory deviation at each time instant represents the trajectory deviation between the first expected motion trajectory and the actual motion trajectory at that time instant. The trajectory deviation between the first expected motion trajectory and the actual motion trajectory includes a plurality of such trajectory deviations at corresponding time instants. For example, the historical time period may include T time instants, the first expected motion trajectory includes T expected trajectory points corresponding to the T time instants, and the actual motion trajectory includes T actual trajectory points corresponding to the T time instants. The trajectory deviation at the t-th time instant may be expressed as an absolute value of a difference between the expected trajectory point at the t-th time instant and the actual trajectory point at the t-th time instant, or as a ratio of the absolute value of the difference between the expected trajectory point at the t-th time instant and the actual trajectory point at the t-th time instant to the expected trajectory point at the t-th time instant.

In some embodiments, determining the backtracking end time instant based on the trajectory deviation at each time instant and the predetermined duration may include: in response to determining that the trajectory deviation at the t-th time instant is greater than or equal to a predetermined threshold and a time difference between the t-th time instant and the T-th time instant is greater than or equal to the predetermined duration, determining a time instant having a time difference from the T-th time instant equal to the predetermined duration as the backtracking end time instant, where t = 1, ..., T.

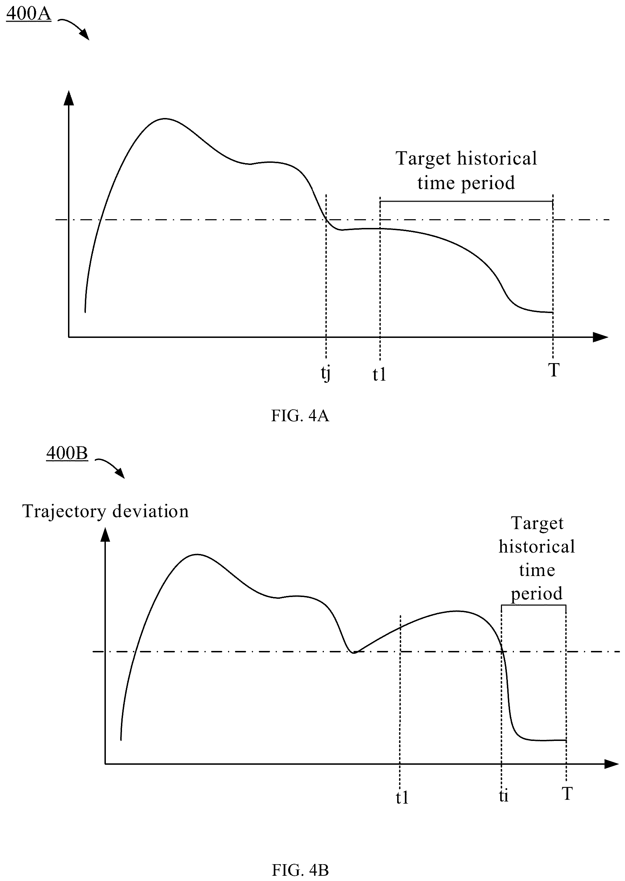

FIG. 4A schematically shows a diagram for determining a backtracking time period according to changes in trajectory deviation between a historical expected motion trajectory and an actual motion trajectory of an obstacle, according to an embodiment of the present disclosure.

As shown in FIG. 4A, in a curve 400A representing changes in trajectory deviation over time, since the trajectory deviation at a $t_j$-th time instant is equal to a predetermined threshold, taking the T-th time instant as the backtracking start time instant, backtracking is performed backward by the predetermined duration to a $t_1$-th time instant, and the $t_1$-th time instant is determined as the backtracking end time instant. Accordingly, the time period between the $t_1$-th time instant and the T-th time instant is the target historical time period.

In some embodiments, determining the backtracking end time instant based on the trajectory deviation at each time instant and the predetermined duration may include: in response to determining that the trajectory deviation at the t-th time instant is greater than or equal to the predetermined threshold and the time difference between the t-th time instant and the T-th time instant is less than the predetermined duration, determining the t-th time instant as the backtracking end time instant.

FIG. 4B schematically shows a diagram for determining a backtracking time period according to changes in trajectory deviation between a historical expected motion trajectory and an actual motion trajectory of an obstacle, according to another embodiment of the present disclosure.

As shown in FIG. 4B, in a curve 400B representing changes in trajectory deviation over time, the duration between the $t_1$-th time instant and the T-th time instant is equal to the predetermined duration. However, since the trajectory deviation at a $t_i$-th time instant is greater than the predetermined threshold, the $t_i$-th time instant may be determined as the backtracking end time instant. Accordingly, the time period between the $t_i$-th time instant and the T-th time instant is determined as the target historical time period.

By determining the target historical time period based on both the deviation between the expected motion trajectory and the actual motion trajectory of the obstacle and the predetermined duration, redundant data in the parameter update process may be reduced on the one hand, and the influence of data with a large trajectory deviation on the convergence speed or convergence quality during the parameter update process may be reduced on the other hand, thereby further improving the parameter update efficiency.

According to embodiments of the present disclosure, updating parameters of the target model based on the first expected motion trajectory and the actual motion trajectory may include: generating a trajectory deviation based on an objective function according to the first expected motion trajectory and the actual motion trajectory; and updating the parameters of the target model based on the trajectory deviation to obtain an updated target model.

According to embodiments of the present disclosure, the objective function may include, but is not limited to, a cost function or an error function. The parameters of the target model may be continuously updated based on the trajectory deviation such that the deviation between the output expected motion trajectory and the actual motion trajectory becomes increasingly smaller until convergence, thereby obtaining the updated target model.

According to embodiments of the present disclosure, model parameters are adjusted according to a comparison result between the expected motion trajectory and the actual motion trajectory of the obstacle, thereby achieving accurate identification of potential issues in the adaptive algorithm of the target model and enabling timely correction and updates. This further improves the accuracy of decision-making and planning results for the target trajectory in the next time period.

In some embodiments, both the expected motion trajectory and the actual motion trajectory of the obstacle are available for each historical time instant within the historical time period. In this case, for each historical time instant, an expected position at the historical time instant may be acquired from the first expected motion trajectory, an actual position at the historical time instant may be acquired from the actual motion trajectory, and a trajectory deviation may be generated based on the objective function by processing a difference between the expected position and the actual position.

For example, the trajectory deviation may be calculated using Equation (2).

$$La = \frac{1}{T} \sum_{t=0}^{T} \sqrt{\left(x_t^{\text{real}} - x_t^{\text{plan}}\right)^2 + \left(y_t^{\text{real}} - y_t^{\text{plan}}\right)^2}$$

$$(2)$$

where La represents a trajectory deviation, T represents a historical duration, $x_t^{\text{real}}$ represents a horizontal coordinate of the actual position of the obstacle at time instant t, $y_t^{\text{real}}$ represents a vertical coordinate of the actual position of the obstacle at time instant t, $x_t^{\text{plan}}$ represents a horizontal coordinate of the expected position of the obstacle at time instant t, and $y_t^{\text{plan}}$ represents a vertical coordinate of the expected position of the obstacle at time instant t.

In some embodiments, the expected motion trajectory and the actual motion trajectory of the obstacle are available only at part of the historical time instants within the historical time period. For example, the target historical time period is from the 5th second to the 10th second, but the obstacle only began participating in the driving decision-making at the 7th second. In this case, an expected end position may be acquired from the first expected motion trajectory, an actual end position may be acquired from the actual motion trajectory, and a trajectory deviation may be generated based on the objective function by processing a difference between the expected end position and the actual end position.

For example, the trajectory deviation may be calculated using Equation (3).

$$Lb = \sqrt{\left(x_T^{\text{real}} - x_T^{\text{plan}}\right)^2 + \left(y_T^{\text{real}} - y_T^{\text{plan}}\right)^2} \tag{3}$$

where Lb represents a trajectory deviation, $x_T^{\text{real}}$ represents a horizontal coordinate of the actual position of the obstacle at an end time instant within the target historical time period, $y_T^{\text{real}}$ represents a vertical coordinate of the actual position of the obstacle at the end time instant within the target historical time period, $x_T^{\text{plan}}$ represents a horizontal coordinate of the expected position of the obstacle at the end time instant within the target historical time period, and $y_T^{\text{plan}}$ represents a vertical coordinate of the expected position of the obstacle at the end time instant within the target historical time period.

According to embodiments of the present disclosure, the trajectory deviation calculation method may be adaptively selected based on the state of the historical data of the obstacle within the target historical time period, such that the calculated result of the trajectory deviation may truly reflect the deviation in the current output result of the autonomous driving system, thereby further improving adaptability and flexibility in response to environmental changes.

In practical application scenarios, a plurality of obstacles may affect the driving decision-making of the autonomous vehicle. In order to accurately output the expected motion trajectory of each obstacle, model parameters may be independently adjusted based on the historical data of each obstacle, thereby further reducing the impact of accumulated deviation caused by dynamic environmental changes on the accuracy of trajectory planning.

According to embodiments of the present disclosure, there are N obstacles, where N is an integer greater than 1. Accordingly, updating the parameters of the target model based on the trajectory deviation to obtain the updated target model may include: updating the parameters of the target model based on the trajectory deviation for an n-th obstacle to obtain an intermediate model, where n = 1, ..., N-1; and updating parameters of the intermediate model based on the trajectory deviation for an N-th obstacle to obtain the updated model.

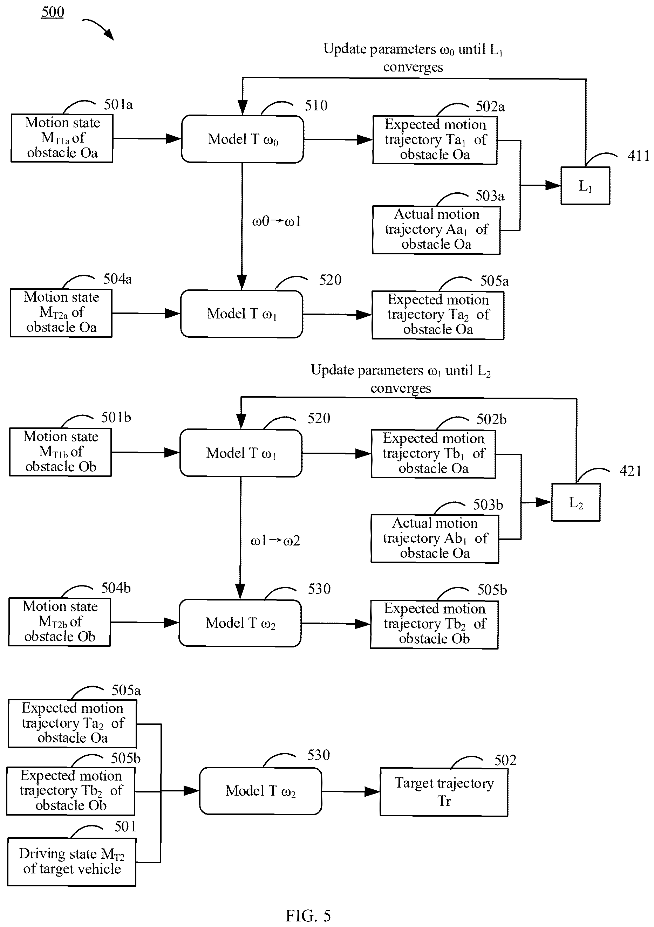

FIG. 5 schematically shows a diagram for updating parameters of a target model according to embodiments of the present disclosure.

As shown in FIG. 5, in embodiment 500, a time period T1 is a historical time period, and a time period T2 is a current time period. A motion state $M_{T1a}$ of an obstacle Oa (labeled by 501a) is input into a model T having parameters $\omega_0$ (labeled by 510), and an expected motion trajectory $Ta_1$ of the obstacle Oa (labeled by 502a) is output.

Then, a trajectory deviation $L_1$ (labeled by 411) is calculated based on the expected motion trajectory $Ta_1$ of the obstacle Oa (502a) and an actual motion trajectory $A_{a1}$ of the obstacle Oa (labeled by 503a), and the parameters of the model T (510) are adjusted based on the trajectory deviation $L_1$ (411) until $L_1$ converges. At this time, the parameters of the model T (510) are updated to $\omega_1$.

Subsequently, a motion state $M_{T1b}$ of an obstacle Ob (labeled by 501b) is input into the model T having parameters $\omega_1$ (labeled by 520), and an expected motion trajectory $Tb_1$ of the obstacle Oa (labeled by 502b) is output.

Then, a trajectory deviation $L_2$ (labeled by 421) is calculated based on the expected motion trajectory $Tb_1$ of the obstacle Oa (502b) and an actual motion trajectory $Ab_1$ of the obstacle Ob (labeled by 503b), and the parameters of the model T (520) are adjusted based on the trajectory deviation $L_2$ (421) until $L_2$ converges. At this time, the parameters of the model T (520) are updated to $\omega_2$.

In some embodiments, the trajectory deviation may be used as a loss value, and the model parameters may be adjusted to reduce the loss value until the loss value converges. The parameter adjustment process is shown in Equation (4):

$$\omega \leftarrow \omega - \alpha \frac{\partial L(\omega)}{\partial \omega} \tag{4}$$

where $\omega$ represents model parameters, $L(\omega)$ represents a loss function, and $\alpha$ represents a predetermined coefficient.

In some embodiments, a reward function may be constructed by using the trajectory deviation as an independent variable, and the model parameters may be adjusted to increase the reward value until the reward value converges. The parameter adjustment process is shown in Equation (5):

$$\omega \leftarrow \omega + \beta \frac{\partial H(x, y; \omega)}{\partial \omega} \tag{5}$$

where $\omega$ represents model parameters, $H(x, y; \omega)$ represents a reward function, and $\beta$ represents a predetermined coefficient.

According to embodiments of the present disclosure, for each obstacle, the model parameters may be independently adjusted based on the historical data of that obstacle, thereby further reducing the impact of the accumulated deviation caused by dynamic environmental changes on the accuracy of trajectory planning.

In some embodiments, the driving environment information may include driving states of the N obstacles and a driving state of the target vehicle. Accordingly, processing the driving environment information by using the updated target model to generate a target trajectory may include: processing the driving state of the n-th obstacle by using the intermediate model to generate an expected driving trajectory of the n-th obstacle in the target time period; processing the driving state of the N-th obstacle by using the updated target model to generate an expected driving trajectory of the N-th obstacle in the target time period; and processing the N expected driving trajectories of the N obstacles in the target time period and the driving state of the target vehicle by using the updated target model to generate the target trajectory.

As shown in FIG. 5, the model T having parameters $\omega_1$ (520) may process a motion state $M_{T2a}$ of the obstacle Oa in the time period $T_2$ (labeled by 504a) to output an expected motion trajectory $Ta_2$ of the obstacle Oa for the next time period (labeled by 505a). The model T having parameters $\omega_2$ (labeled by 530) may process a motion state $M_{T2b}$ of the obstacle Ob in the time period $T_2$ (labeled by 504b) to output an expected motion trajectory $Tb_2$ of the obstacle Ob for the next time period (labeled by 505b).

Finally, the model T having parameters $\omega_2$ (530) may process the expected motion trajectory $Ta_2$ of the obstacle Oa (505a), the expected motion trajectory $Tb_2$ of the obstacle Ob (505b), and a driving state $M_{T2}$ of the target vehicle in the current time period (labeled by 501), to output a target trajectory 502 of the target vehicle for the next time period.

According to embodiments of the present disclosure, for each obstacle, the expected motion trajectory of that obstacle for the next time period is output by using a model with independently updated parameters, thereby further improving the accuracy of predicting the motion trend of the obstacle and thus improving the accuracy of target trajectory planning for the autonomous vehicle.

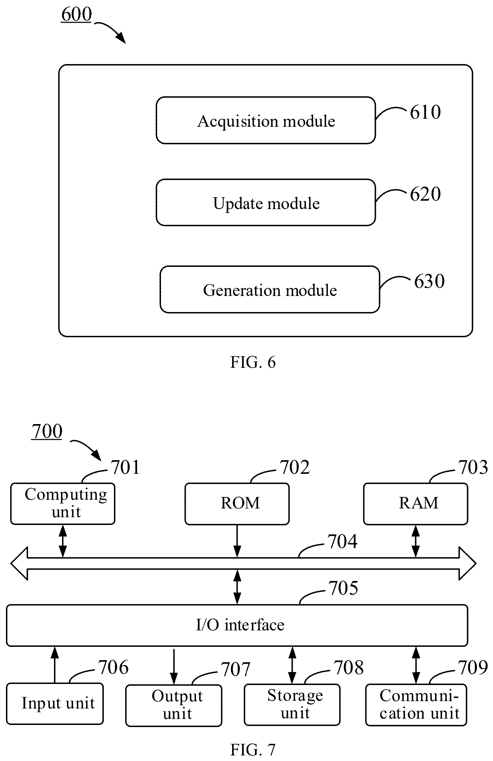

FIG. 6 schematically shows a block diagram of a trajectory planning apparatus according to embodiments of the present disclosure.

As shown in FIG. 6, an apparatus 600 may include an acquisition module 610, an update module 620, and a generation module 630.

The acquisition module 610 is configured to acquire, during driving of a target vehicle, a driving environment information of a current time period, a first expected motion trajectory of an obstacle in a historical time period, and an actual motion trajectory of the obstacle in the historical time period, where a target trajectory of the target vehicle in the current time period is planned based on the first expected motion trajectory.

The update module 620 is configured to update parameters of a target model based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory.

The generation module 630 is configured to process the driving environment information by using the updated target model to generate a target trajectory, where the target trajectory is configured to control the target vehicle to drive in a target time period.

According to embodiments of the present disclosure, the apparatus further includes a determination module and an extraction module.

The determination module is configured to determine a target historical time period from the historical time period based on a predetermined duration.

The extraction module is configured to extract a target expected motion trajectory for the target historical time period and a target actual motion trajectory for the target historical time period respectively from the first expected motion trajectory and the actual motion trajectory.

According to embodiments of the present disclosure, the historical time period includes T time instants, where T is an integer greater than 1. The determination module includes a first determination sub-module, a second determination sub-module, and a third determination sub-module.

The first determination sub-module is configured to determine a T-th time instant as a backtracking start time instant.

The second determination sub-module is configured to determine a backtracking end time instant based on a trajectory deviation at each time instant and the predetermined duration. The trajectory deviation at each time instant represents a deviation between the first expected motion trajectory and the actual motion trajectory at that time instant.

The third determination sub-module is configured to determine a time period between the backtracking start time instant and the backtracking end time instant as the target historical time period.

According to embodiments of the present disclosure, the second determination sub-module includes a first determination unit and a second determination unit.

The first determination unit is configured to, in response to determining that the trajectory deviation at a t-th time instant is greater than or equal to a predetermined threshold and a time difference between the t-th time instant and the T-th time instant is less than the predetermined duration, determine the t-th time instant as the backtracking end time instant, where t = 1, ..., T.

The second determination unit is configured to, in response to determining that the trajectory deviation at the t-th time instant is greater than or equal to the predetermined threshold and the time difference between the t-th time instant and the T-th time instant is greater than or equal to the predetermined duration, determine a time instant having a time difference from the T-th time instant equal to the predetermined duration as the backtracking end time instant.

According to embodiments of the present disclosure, the update module may include a first generation sub-module and an update sub-module.

The first generation sub-module is configured to generate a trajectory deviation based on an objective function according to the first expected motion trajectory and the actual motion trajectory.

The update sub-module is configured to update parameters of the target model based on the trajectory deviation to obtain an updated target model.

According to embodiments of the present disclosure, the first generation sub-module includes a first acquisition unit, a second acquisition unit, and a first generation unit.

The first acquisition unit is configured to acquire, for each historical time instant, an expected position at the historical time instant from the first expected motion trajectory.

The second acquisition unit is configured to acquire, for each historical time instant, an actual position at the historical time instant from the actual motion trajectory.

The first generation unit is configured to generate the trajectory deviation based on the objective function by processing a difference between each expected position and the corresponding actual position.

According to embodiments of the present disclosure, the first generation sub-module may include a third acquisition unit, a fourth acquisition unit, and a second generation unit.

The third acquisition unit is configured to acquire an expected end position from the first expected motion trajectory.

The fourth acquisition unit is configured to acquire an actual end position from the actual motion trajectory.

The second generation unit is configured to generate the trajectory deviation based on the objective function by processing a difference between the expected end position and the actual end position.

According to embodiments of the present disclosure, the update sub-module includes a first update unit and a second update unit.

The first update unit is configured to update parameters of the target model based on a trajectory deviation for an n-th obstacle to obtain an intermediate model, where n = 1, ..., N-1.

The second update unit is configured to update parameters of the intermediate model based on a trajectory deviation for an N-th obstacle to obtain the updated target model.

According to embodiments of the present disclosure, the driving environment information includes driving states of the N obstacles and a driving state of the target vehicle. The generation module includes a second generation sub-module, a third generation sub-module, and a fourth generation sub-module.

The second generation sub-module is configured to process the driving state of the n-th obstacle by using the intermediate model to generate an expected driving trajectory of the n-th obstacle in the target time period.

The third generation sub-module is configured to process the driving state of the N-th obstacle by using the updated target model to generate an expected driving trajectory of the N-th obstacle in the target time period.

The fourth generation sub-module is configured to process the N expected driving trajectories of the N obstacles in the target time period and the driving state of the target vehicle by using the updated target model to generate the target trajectory.

According to embodiments of the present disclosure, the present disclosure further provides an electronic device, an autonomous vehicle, a readable storage medium, and a computer program product.

According to embodiments of the present disclosure, an electronic device is provided, including: at least one processor; and a memory communicatively connected to the at least one processor, where the memory stores instructions executable by the at least one processor, and the instructions are configured to, when executed by the at least one processor, cause the at least one processor to perform the method described above.

According to embodiments of the present disclosure, an autonomous vehicle is provided, including the electronic device described above.

According to embodiments of the present disclosure, a non-transitory computer-readable storage medium having computer instructions therein is provided, where the computer instructions are configured to cause a computer to perform the method described above.

According to embodiments of the present disclosure, a computer program product including a computer program is provided, where the computer program is configured to, when executed by a processor, implement the method described above.

FIG. 7 shows a schematic block diagram of an exemplary electronic device 700 that may be used to implement embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 includes a computing unit 701 which may perform various appropriate actions and processes according to a computer program stored in a read only memory (ROM) 702 or a computer program loaded from a storage unit 708 into a random access memory (RAM) 703. In the RAM 703, various programs and data necessary for an operation of the electronic device 700 may also be stored. The computing unit 701, the ROM 702 and the RAM 703 are connected to each other through a bus 704. An input/output (I/O) interface 705 is also connected to the bus 704.

A plurality of components in the electronic device 700 are connected to the input/output (I/O) interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the electronic device 700 to exchange information/data with other devices through a computer network such as Internet and/or various telecommunication networks.

The computing unit 701 may be various general-purpose and/or dedicated processing assemblies having processing and computing capabilities. Some examples of the computing units 701 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and processes described above, such as the trajectory planning method. For example, in some embodiments, the trajectory planning method may be implemented as a computer software program which is tangibly embodied in a machine-readable medium, such as the storage unit 708. In some embodiments, the computer program may be partially or entirely loaded and/or installed in the electronic device 700 via the ROM 702 and/or the communication unit 709. The computer program, when loaded in the RAM 703 and executed by the computing unit 701, may execute one or more steps in the trajectory planning method described above. Alternatively, in other embodiments, the computing unit 701 may be used to perform the trajectory planning method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the data processing method of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, a server of a distributed system, or a server combined with block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A trajectory planning method, comprising:

   acquiring (S210), during driving of a target vehicle, a driving environment information (301) of a current time period, a first expected motion trajectory of an obstacle in a historical time period, and an actual motion trajectory of the obstacle in the historical time period, wherein a driving trajectory of the target vehicle in the current time period is generated based on the first expected motion trajectory;
   updating (S220) parameters of a target model based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory; and
   processing (S230) the driving environment information (301) by using the updated target model to generate a target trajectory, wherein the target trajectory is configured to control the target vehicle to drive in a target time period.

2. The method of claim 1, further comprising: before updating (S220) parameters of a target model based on a trajectory deviation between the first expected motion trajectory and the actual motion trajectory,

determining a target historical time period from the historical time period based on a predetermined duration; and extracting a target expected motion trajectory for the target historical time period and a target actual motion trajectory for the target historical time period respectively from the first expected motion trajectory and the actual motion trajectory.

3. The method of claim 2, wherein the historical time period comprises T time instants, and T is an integer greater than 1; and
wherein the determining a target historical time period from the historical time period based on a predetermined duration comprises:

determining a T-th time instant as a backtracking start time instant;
determining a backtracking end time instant based on a trajectory deviation at each time instant and the predetermined duration, wherein the trajectory deviation at each time instant represents a trajectory deviation between the first expected motion trajectory and the actual motion trajectory at the time instant; and
determining a time period between the backtracking start time instant and the backtracking end time instant as the target historical time period.

4. The method of claim 3, wherein the determining a backtracking end time instant based on a trajectory deviation at each time instant and the predetermined duration comprises:

in response to determining that the trajectory deviation at a t-th time instant is greater than or equal to a predetermined threshold and a time difference between the t-th time instant and the T-th time instant is less than the predetermined duration, determining the t-th time instant as the backtracking end time instant, where t = 1, ..., T; and
in response to determining that the trajectory deviation at the t-th time instant is greater than or equal to the predetermined threshold and the time difference between the t-th time instant and the T-th time instant is greater than or equal to the predetermined duration, determining a time instant having a time difference from the T-th time instant equal to the predetermined duration as the backtracking end time instant.

5. The method of any one of claims 1 to 4, wherein the updating (S220) parameters of a target model based on a trajectory deviation between the first expected motion trajectory and the actual motion trajectory comprises:

generating a trajectory deviation based on an objective function according to the first expected motion trajectory and the actual motion trajectory; and
updating the parameters of the target model based on the trajectory deviation to obtain the updated target model.

6. The method of claim 5, wherein the generating a trajectory deviation based on an objective function according to the first expected motion trajectory and the actual motion trajectory comprises:

acquiring an expected position for each historical time instant from the first expected motion trajectory;
acquiring an actual position for each historical time instant from the actual motion trajectory; and
generating the trajectory deviation based on the objective function by processing a difference between each expected position and the corresponding actual position.

7. The method of claim 5, wherein the generating a trajectory deviation based on an objective function according to the first expected motion trajectory and the actual motion trajectory comprises:

acquiring an expected end position from the first expected motion trajectory;
acquiring an actual end position from the actual motion trajectory; and
generating the trajectory deviation based on the objective function by processing a difference between the expected end position and the actual end position.

8. The method of claim 5, wherein N obstacles are included, and N is an integer greater than 1; and
wherein the updating the parameters of the target model based on the trajectory deviation to obtain the updated target model comprises:

updating the parameters of the target model based on the trajectory deviation for an n-th obstacle to obtain an intermediate model, where n = 1, ..., N-1; and

updating parameters of the intermediate model based on the trajectory deviation for an N-th obstacle to obtain the updated target model.

9. The method of claim 8, wherein the driving environment information (301) comprises driving states of the N obstacles and a driving state of the target vehicle; and
wherein the processing (S230) the driving environment information (301) by using the updated target model to generate a target trajectory comprises:

processing the driving state of the n-th obstacle by using the intermediate model to generate an expected driving trajectory of the n-th obstacle in the target time period;
processing the driving state of the N-th obstacle by using the updated target model to generate an expected driving trajectory of the N-th obstacle in the target time period; and
processing the N expected driving trajectories of the N obstacles in the target time period and the driving state of the target vehicle by using the updated target model to generate the target trajectory.

10. A trajectory planning apparatus (600), comprising:

an acquisition module (610) configured to acquire (S210), during driving of a target vehicle, a driving environment information (301) of a current time period, a first expected motion trajectory of an obstacle in a historical time period, and an actual motion trajectory of the obstacle in the historical time period, wherein a driving trajectory of the target vehicle in the current time period is generated based on the first expected motion trajectory;
an update module (620) configured to update (S220) parameters of a target model based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory; and
a generation module (630) configured to process (S230) the driving environment information (301) by using the updated target model to generate a target trajectory, wherein the target trajectory is configured to control the target vehicle to drive in a target time period.

11. An electronic device (700), comprising:

at least one processor; and
a memory communicatively connected to the at least one processor, wherein the memory stores instructions executable by the at least one processor, and the instructions are configured to, when executed by the at least one processor, cause the at least one processor to perform the method of any one of claims 1 to 9.

12. An autonomous vehicle, comprising the electronic device of claim 11.

13. A non-transitory computer-readable storage medium having computer instructions therein, wherein the computer instructions are configured to cause a computer to perform the method of any one of claims 1 to 9.

14. A computer program product comprising a computer program, wherein the computer program is configured to, when executed by a processor, implement the method of any one of claims 1 to 9.

FIG. 1

200

During driving of a target vehicle, a driving environment information of a current time period, a first expected motion trajectory of an obstacle in a historical time period, and an actual motion trajectory of the obstacle in the historical time period are acquired

S210

Parameters of a target model are updated based on a trajectory deviation between the first expected motion trajectory and the actual motion trajectory, such that a trajectory deviation between a second expected motion trajectory output by the updated target model and the actual motion trajectory is less than the trajectory deviation between the first expected motion trajectory and the actual motion trajectory

S220

The driving environment information is processed by using the updated target model to generate a target trajectory, where the target trajectory is configured to control the target vehicle to drive in a target time period

S230

FIG. 2

300

### 310
**Historical data storage and parsing module**

| 301 | 302 | 303 | 304 |
|---|---|---|---|
| Driving environment information | Vehicle driving information | Obstacle motion information | Decision-making and planning result |

311
Historical data pool

312
Historical data processing unit

### 320
**Decision-making and planning result posterior module**

321
Historical data extraction unit

322
Decision-making and planning effect quantitative analysis unit

323
Decision-making and planning rationality evaluation unit

### 330
**Parameter update module**

331
Loss/reward calculation unit

332
Gradient backpropagation unit

333
Parameter update unit

### 340
**User-defined interface module**

341
Time window length

342
Evaluation metric and threshold

343
Loss/reward function

FIG. 3

400A

Target historical
time period

tj    t1                    T

FIG. 4A

400B

Trajectory deviation

Target
historical
time
period

t1          ti    T

FIG. 4B

500

Update parameters $\omega_0$ until $L_1$
converges

501a

Motion state
$M_{T1a}$ of
obstacle Oa

510

Model T $\omega_0$

502a

Expected motion
trajectory $Ta_1$ of
obstacle Oa

411

$L_1$

$\omega0 \rightarrow \omega1$

503a

Actual motion
trajectory $Aa_1$ of
obstacle Oa

504a

Motion state
$M_{T2a}$ of
obstacle Oa

520

Model T $\omega_1$

505a

Expected motion
trajectory $Ta_2$ of
obstacle Oa

Update parameters $\omega_1$ until $L_2$
converges

501b

Motion state
$M_{T1b}$ of
obstacle Ob

520

Model T $\omega_1$

502b

Expected motion
trajectory $Tb_1$ of
obstacle Oa

421

$L_2$

$\omega1 \rightarrow \omega2$

503b

Actual motion
trajectory $Ab_1$ of
obstacle Oa

504b

Motion state
$M_{T2b}$ of
obstacle Ob

530

Model T $\omega_2$

505b

Expected motion
trajectory $Tb_2$ of
obstacle Ob

505a

Expected motion
trajectory $Ta_2$ of
obstacle Oa

505b

Expected motion
trajectory $Tb_2$ of
obstacle Ob

530

Model T $\omega_2$

502

Target trajectory
Tr

501

Driving state $M_{T2}$
of target vehicle

FIG. 5

EP 4 744 995 A2

600

Acquisition module — 610

Update module — 620

Generation module — 630

FIG. 6

700
— 701
Computing unit

— 702
ROM

— 703
RAM

— 704

— 705
I/O interface

— 706
Input unit

— 707
Output unit

— 708
Storage unit

— 709
Communi-cation unit

FIG. 7

23